# EUROPÄISCHE PATENTSCHRIFT

(11) **EP 2 419 191 B1**
(45) Veröffentlichungstag und Bekanntmachung des Hinweises auf die Patenterteilung: **12.12.2012**
(21) Anmeldenummer: 10708137.4
(22) Anmeldetag: 10.03.2010
(51) Int. Cl.: B01D 29/15, B01D 29/60, B01D 29/92, B01D 35/027

(54) **FILTERVORRICHTUNG**
FILTER APPARATUS
DISPOSITIF DE FILTRATION

(30) Priorität: 15.04.2009 DE 102009017093
(43) Veröffentlichungstag der Anmeldung: 22.02.2012
(73) Patentinhaber: HYDAC FILTERTECHNIK GMBH, 66280 Sulzbach/Saar (DE)
(72) Erfinder: SANN, Norbert, 66292 Riegelsberg (DE); SAKRASCHINSKY, Michael, 66386 St. Ingbert (DE); HENNES, Stefan, 66540 Hangard (DE)
(74) Vertreter: Bartels, Martin Erich Arthur
(86) Internationale Anmeldenummer: PCT/EP2010/001481
(87) Internationale Veröffentlichungsnummer: WO 2010/118803

(56) Entgegenhaltungen:
- EP-A1- 0 773 053
- EP-A1- 1 419 807
- DE-U1- 29 508 102

## Beschreibung

Die Erfindung betrifft eine Filtervorrichtung, vorgesehen für den Einbau in einen Fluid-Vorratstank, mit mindestens einem vorzugsweise austauschbaren Filterelement, das von außen her zu einem inneren, die Reinseite bildenden Filterhohlraum hin von einem Fluid durchströmbar und von einer Gehäusewand umgeben ist, die einen Fluidraum bildet, in den das abgereinigte Fluid aus dem inneren Filterhohlraum einströmbar ist, wobei die Gehäusewand zumindest eine Wandöffnung aufweist, die einen innerhalb des Bereiches des veränderbaren Fluidpegels im Vorratstank liegenden Fluiddurchlass bildet.

Derartige Lösungen werden fachsprachlich auch mit Intank-Lösung bezeichnet. Solche Vorrichtungen kommen in erster Linie bei Einrichtungen und Geräten zum Einsatz, die mit hydraulischen Arbeitskreisen ausgerüstet sind, was insbesondere bei mobilen Maschinen der Fall ist, beispielsweise bei Baggern, Rad- oder Teleskopladern etc., die umfänglich mit einer Arbeitshydraulik versehen sind, beispielsweise in Form von mittels Pumpen ansteuerbarer und versorgbarer Hydraulikzylinder. Im Betrieb bildet das Filterelement den Rücklauffilter, von dessen Reinseite her das abgereinigte Hydrauliköl unmittelbar in den Hydrauliktank gelangt, aus dem das Hydrauliköl direkt wieder von der betreffenden Hydraulikpumpe angesaugt wird.

Beim Durchlauf durch die Arbeitskreise kommt es regelmäßig zu einem Eintrag von Luft in das Hydrauliköl. Diese Luft verschlechtert das Verhalten des Hydrauliksystems, man spricht beispielsweise von einem "weich" werden der Hydraulik. Außerdem besteht die Gefahr von Kavitation der Hydraulikpumpe beim Ansaugen von Luft. Im Hinblick hierauf ist es wünschenswert, dass während der Verweilzeit des Hydrauliköls im Tank eine gewisse Entgasung dadurch stattfindet, dass Luft im Tank aufsteigt und entweicht.

Insbesondere bei mobilen Arbeitsgeräten, bei denen komplexe Systemkomponenten auf engem Raum anzuordnen sind, besteht der Zwang, die Komponenten in möglichst platzsparender Bauweise auszuführen. Dies bedeutet, dass der betreffende Hydrauliktank kleinvolumig auszuführen ist. Bei Benutzung kleinerer Tanks wird jedoch das Hydrauliköl bei entsprechend verkürzter Verweilzeit im Tank schneller und öfter umgewälzt. Dies führt wiederum dazu, dass im Hydrauliköl befindliche Luft nicht mehr ausreichend entweichen kann, weil die Luft kaum die Möglichkeit hat, im Tank aufzusteigen und zu entweichen.

Die DE 295 08 102 U1 offenbart einen Filter. Der Filter weist in einem Kopfteil einen Fluideinlass und einen Fluidauslass auf.

Durch die EP 1 419 807 A1 gehört eine Filtereinrichtung mit einem auswechselbaren Filterelement zum Stand der Technik. Das Filterelement ist in einem oberen Teil eines Behältnisses gehalten und trennt einen Schutzseite von einer Reinseite.

Im Hinblick auf diese Problematik liegt der Erfindung die Aufgabe zugrunde eine Filtervorrichtung zur Verfügung zu stellen, die eine wirksame Entgasung selbst bei kleinvolumiger Auslegung des betreffenden Vorratstank ermöglicht.

Erfindungsgemäß ist diese Aufgabe durch eine Filtervorrichtung gelöst, die die Merkmale des Patentanspruches 1 in seiner Gesamtheit aufweist.

Entsprechend dem kennzeichnenden Teil des Anspruches 1 ist bei einer Filtervorrichtung der eingangs genannten Art eine in Abhängigkeit vom Fluidpegel im Vorratstank betätigbare Steuereinrichtung vorgesehen, die den Fluiddurchlass der zumindest einen Wandöffnung an die Lage der Oberfläche des Fluides im Vorratstank annähert. Somit ist ein oberflächennahes Ausströmen des Fluides vorgegeben, wobei die Lage des Ausströmbereiches den Änderungen des Fluidpegels nachfolgt. Dadurch, dass so trotz Schwankungen des Fluidpegels das gereinigte Fluid oberflächennah aus der Filtervorrichtung ausstritt, werden Absonderung und Entweichen von Gasblasen aus dem Hydrauliköl wesentlich begünstigt. Durch diese Lage des Ausströmbereiches erfolgt auch eine geringere Vermischung mit dem im Tank enthaltenen Hydrauliköl. Die erreichte, weitgehende Entgasung des Hydrauliköles verbessert das Betriebsverhalten hydraulischer Arbeitskreise in mehrerer Hinsicht, beispielsweise durch Verminderung der Geräuschentwicklung, Vermeiden von Schäden wie Kavitation, verringerter Temperaturerhöhung, Vermeidung dynamischer Betriebsprobleme, Vermeidung vorzeitiger Ölalterung oder unerwünschter Viskositätsänderungen.

Bei besonders vorteilhaften Ausführungsbeispielen weist die Steuereinrichtung einen Schwimmer auf, der Schwankungen des Fluidpegels in Stellbewegungen zur Einstellung der Lage des Öffnungsquerschnittes des Fluiddurchlasses der zumindest einen Wandöffnung umsetzt. Die Schwimmerbetätigung ermöglicht eine betriessichere Steuerung bei einfachster Bauweise.

Bei vorteilhaften Ausführungsbeispielen kann die Anordnung so getroffen sein, dass die die zumindest eine Wandöffnung aufweisende Gehäusewand Teil eines topfartigen Filtergehäuses ist, das einen geschlossenen Topfboden aufweist, der durch die aus dem inneren Filterhohlraum des Filterelementes austretende Fluidströmung beaufschlagt ist, wobei der Topfboden eine als Diffusor wirkende Strömungs-Umlenkeinrichtung aufweist.

Bei Ausführungsbeispielen mit einem Filtergehäuse, das zumindest im Bereich des Topfbodens kreiszylindrisch gestaltet ist und wobei das abgereinigte Fluid aus dem inneren Filterhohlraum zur Achse des Filtergehäuses im wesentlichen koaxial in Richtung auf den Topfboden austritt, kann die als Diffusor wirkende Strömungs-Umlenkeinrichtung durch eine Wölbung des Topfbodens gebildet sein.

Für die Optimierung der Strömungsverhältnisse kann die Anordnung so getroffen sein, dass die Wölbung durch einen Teil der Innenwand eines Torus gebildet ist, so dass die den Boden beaufschlagende Axialströmung in eine Radialströmung ausgebreitet wird, die sich entlang der Gehäusewand in einer aufsteigenden Axialströmung fortsetzt. Dadurch erfolgt der Austritt des Fluides aus den betreffenden Fluiddurchlässen des Filtergehäuses in Form einer im wesentlichen beruhigten Strömung ohne dass es im Tank zu einem Spritzen oder Schaumbildungen kommt, selbst bei hohen Arbeitsdrücken und/oder großen Fluidmengen.

Hinsichtlich der Ausbildung der Steuereinrichtung kann die Anordnung vorzugsweise so getroffen sein, dass die Steuereinrichtung eine eine Art Ventilschieber bildende, mit einem als Schwimmer dienenden Auftriebskörper versehene Hülse aufweist, die auf der die zumindest eine Wandöffnung aufweisenden Gehäusewand axial verschiebbar gelagert ist und in der Hülsenwand zumindest einen Durchbruch aufweist, der zur Steuerung des Öffnungsquerschnittes des Fluiddurchlasses der zumindest einen Wandöffnung durch die vom Schwimmer bewirkten Axialbewegungen relativ zum Fluiddurchlass einstellbar ist.

Um ein widerstandsarmes Ausströmen bei größeren Fluidmengen zu begünstigen, können mehrere, umfänglich in der Gehäusewand verteilte Wandöffnungen als Fluiddurchlässe vorgesehen sein.

In Entsprechung hierzu können in der als Ventilschieber fungierenden Hülsenwand mehrere, umfänglich verteilt angeordnete Durchbrüche vorhanden sein.

Nachstehend ist die Erfindung anhand eines in der Zeichnung dargestellten Ausführungsbeispieles im Einzelnen erläutert. Es zeigen:

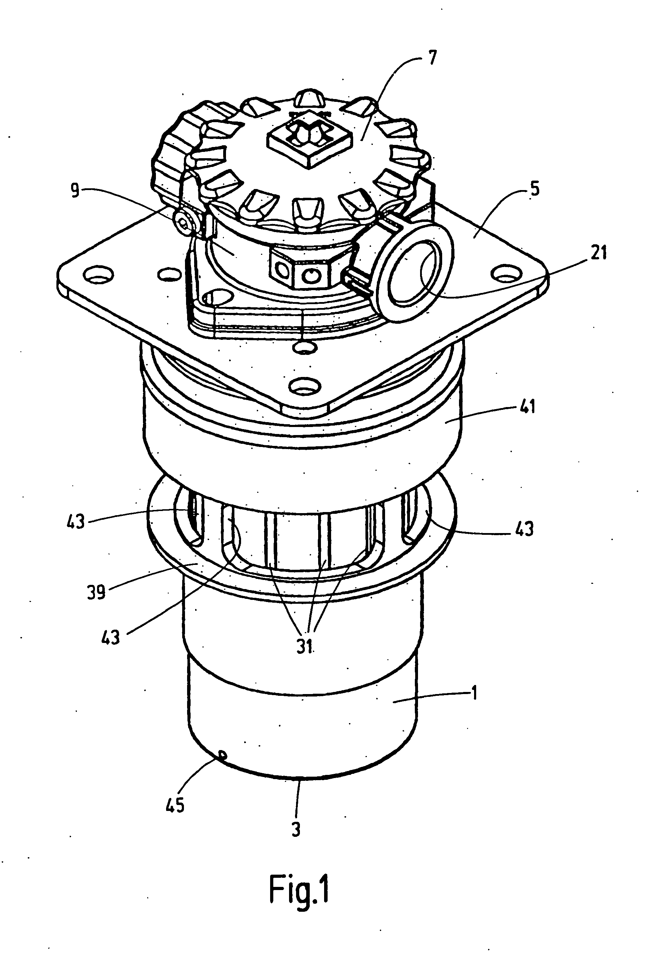

- Fig. 1: eine annähernd im Maßstab einer praktischen Ausführungsform gezeichnete perspektivische Schrägansicht eines Ausführungsbeispieles der erfindungsgemäßen Vorrichtung;
- Fig. 2: einen Längsschnitt des Ausführungsbeispieles von Fig. 1, wobei eine mit einem Schwimmer versehene Steuereinrichtung in einer angehobenen Endposition dargestellt ist, und
- Fig. 3: eine Seitenansicht des Ausführungsbeispieles, wobei die Steuereinrichtung in einer demgegenüber abgesenkten Position dargestellt ist.

Nachstehend ist die Erfindung anhand einer sogenannten In-Tank-Filtervorrichtung erläutert, bei der die in den Fig. gezeigte Vorrichtung in einen nicht dargestellten Hydrauliktank eingebaut ist.

Die Filtervorrichtung weist ein Filtergehäuse 1 in Form eines im großen Ganzen kreiszylinderförmigem Topfes auf, der bodenseitig durch einen einstückig angeformten Topfboden 3 geschlossen ist. Am oberen Ende des Filtergehäuses 1 befinden sich eine Flanschplatte 5 für den Einbau der Vorrichtung in eine Tanköffnung in der oberen Tankwand eines nicht dargestellten Hydrauliktanks. Auf der Flanschplatte 5 befindet sich ein den oberen Abschluss des Filtergehäuses 1 bildender Gehäusekopf 9 mit einem zur Auswechslung eines Filterelements 11 abnehmbaren Deckel 7. Das Filterelement 11 weist zur Bildung einer Art Filterpatrone ein Innengehäuse 13 auf, das an seinem oberen Ende im Gehäusekopf 9 gelagert ist und sich koaxial im Gehäuse 1 in Richtung auf den Topfboden 3 erstreckt, jedoch zur Bildung eines Strömungsraumes 15 in einem größeren Abstand vom Topfboden 3 endet. An diesem unteren Ende des Innengehäuses 13 befindet sich eine Ausströmöffnung 17, durch die abgereinigtes Fluid aus dem inneren Filterhohlraum 19 des Filterelementes 11 mit axialer Strömungsrichtung zum Topfboden 3 hin beim Betrieb der Filtervorrichtung ausströmt. Das obere Ende des Innengehäuses 13 ist zum Gehäusekopf 9 hin offen, in dem in der bei derartigen Vorrichtungen üblichen Weise Fluidführungen vorhanden sind, wobei ein Fluidanschluss 21 für die Zufuhr von Rücklauf-Hydrauliköl vorgesehen ist, das zu einem die Schmutzseite bildenden, äußeren Filterhohlraum 23 gelangt, der innerhalb des Innengehäuses 13 die Außenseite eines Filtermediums 25 umgibt. Dieses ist beispielsweise in Form einer plissierten Filtermatte auf einem fluiddurchlässigen Stützrohr 27 angeordnet, das den inneren Filterhohlraum 19 umgibt, der und unter Bildung einer Abdichtung mit der Austrittsöffnung 17 verbunden ist. Im Betrieb durchströmt das rücklaufende Fluid vom äußeren Filterhohlraum 23 her das Filtermedium 25 zum inneren Filterhohlraum 19 hin, aus dem es in Axialströmung durch die Ausströmöffnung 17 zum Topfboden 3 strömt. Am oberen Ende des Filterelementes 11 befindet sich in der bei derartigen Vorrichtungen üblichen Weise eine Bypassventilanordnung 29, die in Abhängigkeit von einem entsprechenden Differenzdruck zwischen äußerem Filterhohlraum 23 und innerem Filterhohlraum 19 einen Fluidweg zwischen diesen Räumen freigibt.

Das im Betrieb aus dem inneren Filterhohlraum 19 durch die Ausströmöffnung 17 in Axialrichtung ausströmende, abgereinigte Fluid gelangt auf seinem nach unten gerichteten Strömungsweg nicht zum Grund des Vorratstanks, weil das Filtergehäuse 1 einen geschlossenen Boden 3 besitzt, der in einem Abstand von der Ausströmöffnung 17 einen Strömungsraum 15 begrenzt. Für den Austritt des gereinigten Fluides aus dem Strömungsraum 15 sind in der Wand des Filtergehäuses 1 Wandöffnungen 31 als Fluiddurchlässe gebildet, wobei diese Wandöffnungen 31 gegenüber dem Topfboden 3, und damit insbesondere gegenüber dem Grundbereich des Vorratstankes, nach oben versetzt angeordnet sind, und zwar in einen Bereich, innerhalb dessen sich der Fluidpegel im Vorratstank während des Betriebs ändert. Während üblicherweise das abgereinigte Fluid aus dem Filterhohlraum des Filterelementes axial nach unten zum Grund des Tanks hin strömt, ist bei der Erfindung eine Strömungsumlenkung am geschlossenen Topfboden 3 gebildet, so dass aus der nach unten gerichteten Axialströmung innerhalb des Strömungsraumes 15 eine nach oben gerichtete Strömung gebildet wird, die aus den nach oben versetzten Wandöffnungen 31 ausströmt.

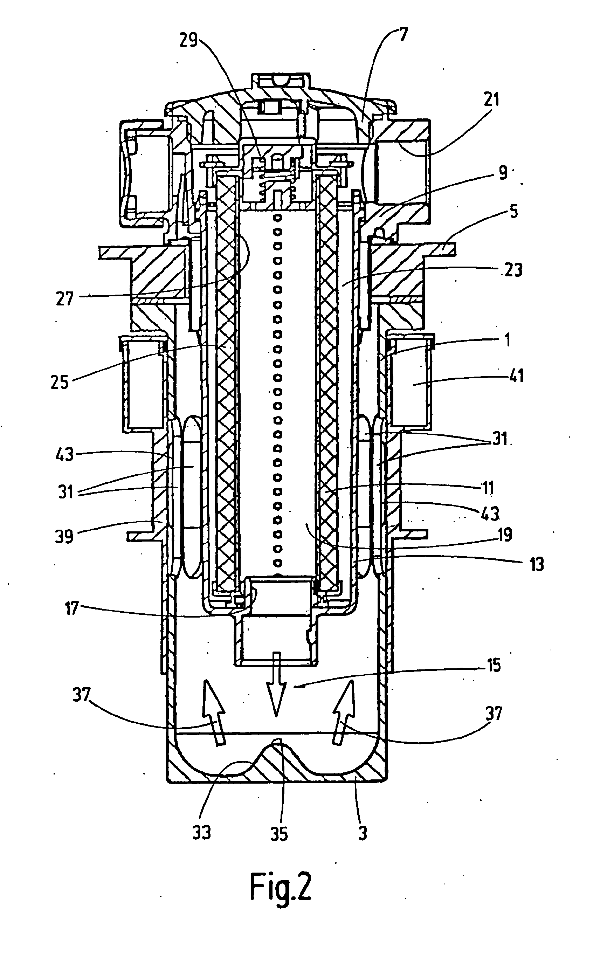

Die am Topfboden 3 gebildete Strömungs-Umlenkeinrichtung ist als Diffusor gestaltet. Zu diesem Zweck weist der Topfboden 3 eine Wölbung 33 auf, die der Innenwand eines Teiles eines Torus entspricht, so dass die Axialströmung aus der Ausströmöffnung 17 auf eine Erhebung 35 auftrifft, an der die Axialströmung in eine radiale Strömung ausgebreitet wird, die, wie mit Strömungspfeilen 37 in Fig. 2 angedeutet ist, sich entlang der Innenwand des Filtergehäuses 1 in einer aufsteigenden Axialströmung in Richtung auf die Wandöffnungen 31 fortsetzt.

Bei der Erfindung ist eine Steuereinrichtung vorgesehen, die den Öffnungsquerschnitt der durch die Wandöffnungen 31 gebildeten Fluiddurchlässe an den aktuellen Pegelstand im Vorratstank anpasst. Zu diesem Zweck ist auf der Außenseite des Filtergehäuses 1 eine eine Art Ventilschieber bildende Hülse 39 axial verschiebbar gelagert, an deren oberem Ende sich ein Auftriebskörper 41 in Form eines das Filtergehäuse 1 ringförmig umgebenden Luftkastens befindet. Der Auftriebskörper 41 dient als Schwimmer, der der Hülse 39 entsprechend den Änderungen des Fluidpegels Stellbewegungen vermittelt. Für die Steuerfunktion weist die Hülse 39 fensterartige Durchbrüche 43 auf. Durch die Lagebeziehung zwischen dem durch den Auftriebskörper 41 gebildeten Schwimmer, der sich im Betrieb stets im Oberflächenbereich des Fluidpegels befindet, und den Durchbrüchen 43 sowie den Wandöffnungen 31 ist im Betrieb immer gewährleistet, dass der an den Wandöffnungen 31 des Filtergehäuses 1 gebildete Fluiddurchlass nahe der Fluidoberfläche gelegen ist. Mit anderen Worten gesagt, ist daher sichergestellt, dass der gereinigte Fluidstrom innerhalb des Filtergehäuses 1 so weit aufsteigen kann, dass der Fluidaustritt in den Tank auf einen Bereich leicht unterhalb der Oberfläche des Fluidpegels begrenzt ist. Während also durch die Strömungsumlenkung am Topfboden 3 erreicht ist, dass der Fluidaustritt ins Tankinnere nach oben in Richtung auf die Fluidoberfläche versetzt ist, ist gleichzeitig sichergestellt, dass selbst bei einem Absinken des Fluidpegels nicht die Gefahr besteht, dass Fluid aus den Wandöffnungen 31 oberhalb des aktuellen Fluidpegels austreten kann, so dass die Gefahr vermieden ist, dass es durch einen oberflächlichen Fluidaustritt zu Spritzen oder Schaumbildungen im Tank kommen könnte. In jedem Falle ist durch die Kombination Schwimmersteuerung/Diffusor das Strömungsverhalten optimiert, wobei durch das oberflächennahe Ausströmen die Entgasung des Fluides begünstigt wird.

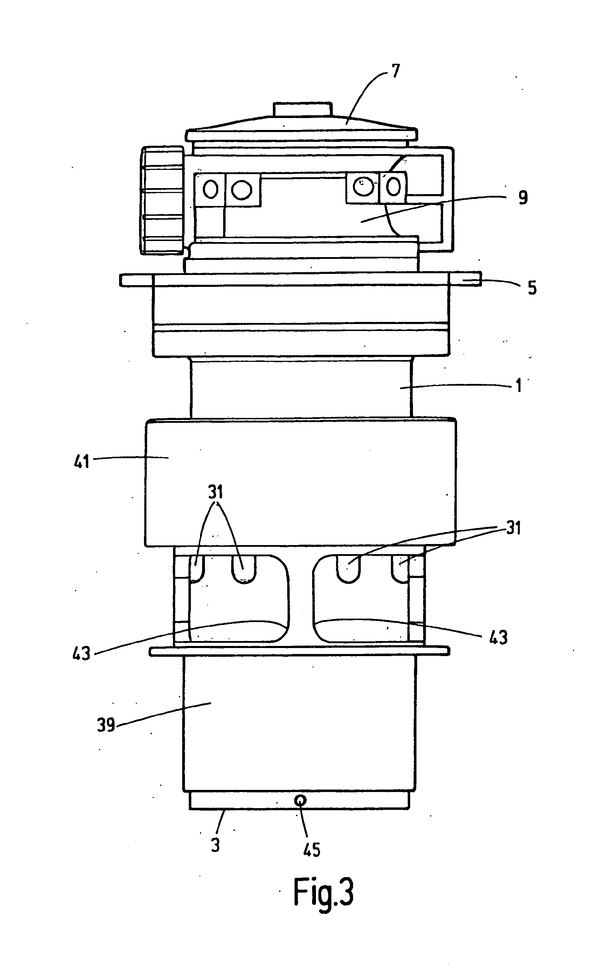

Zur Begrenzung der in Fig. 3 dargestellten unteren Endlage der Hülse 39 befindet sich am Topfboden 3 des Filtergehäuses 1 ein Anschlagstift 45.

## Patentansprüche

1. Filtervorrichtung, vorgesehen für den Einbau in einen Fluid-Vorratstank, mit mindestens einem vorzugsweise austauschbaren Filterelement (11), das von außen her zu einem inneren, die Reinseite bildenden Filterhohlraum (19) hin von einem Fluid durchströmbar und von einer Gehäusewand (1) umgeben ist, die einen Fluidraum (15) bildet, in den das abgereinigte Fluid aus dem inneren Filterhohlraum (19) einströmbar ist, wobei die Gehäusewand zumindest eine Wandöffnung (31) aufweist, die einen innerhalb des Bereiches des veränderbaren Fluidpegels im Vorratstank liegenden Fluiddurchlass bildet, **dadurch gekennzeichnet, dass** eine in Abhängigkeit vom Fluidpegel im Vorratstank betätigbare Steuereinrichtung (39, 41, 43) vorgesehen ist, die den Fluiddurchlass der zumindest einen Wandöffnung (31) an die Lage der Oberfläche des Fluides im Vorratstank annähert.

2. Filtervorrichtung nach Anspruch 1, **dadurch gekennzeichnet, dass** die Steuereinrichtung (39, 41, 43) einen Schwimmer (41) aufweist, der Schwankungen des Fluidpegels in Stellbewegungen zur Einstellung der Lage des Öffnungsquerschnittes des Fluiddurchlasses der zumindest einen Wandöffnung (31) umsetzt.

3. Filtervorrichtung nach Anspruch 2, **dadurch gekennzeichnet, dass** die die zumindest eine Wandöffnung (31) aufweisende Gehäusewand Teil eines topfartigen Filtergehäuses (1) ist, das einen geschlossenen Topfboden (3) aufweist, der durch die aus dem inneren Filterhohlraum (19) des Filterelementes (11) austretende Fluidströmung beaufschlagt ist, und dass der Topfboden (3) eine als Diffusor wirkende Strömungs-Umlenkeinrichtung (33, 35) aufweist.

4. Filtervorrichtung nach Anspruch 3, **dadurch gekennzeichnet, dass** das Filtergehäuse (1) zumindest im Bereich des Topfbodens (3) kreiszylindrisch gestaltet ist, dass das abgereinigte Fluid aus dem inneren Filterhohlraum (19) zur Achse des Filtergehäuses (1) im wesentlichen koaxial in Richtung auf den Topfboden (3) austritt und dass dieser eine die Umlenkeinrichtung bildende Wölbung (33, 35) aufweist.

5. Filtervorrichtung nach Anspruch 4, **dadurch gekennzeichnet, dass** die Wölbung durch einen Teil der Innenwand eines Torus(33) gebildet ist, so dass die den Boden (3) beaufschlagende Axialströmung in eine Radialströmung ausgebreitet wird, die sich entlang der Gehäusewand (1) in einer aufsteigenden Axialströmung fortsetzt.

6. Filtervorrichtung nach einem der Ansprüche 2 bis 5, **dadurch gekennzeichnet, dass** die Steuereinrichtung (39, 41, 43) eine eine Art Ventilschieber bildende, mit einem als Schwimmer dienenden Auftriebskörper (41) versehene Hülse (39) aufweist, die auf der die zumindest eine Wandöffnung (31) aufweisenden Gehäusewand (1) axial verschiebbar gelagert ist und in der Hülsenwand zumindest einen Durchbruch (43) aufweist, der zur Steuerung des Öffnungsquerschnittes des Fluiddurchlasses der zumindest einen Wandöffnung (31) durch die vom Schwimmer bewirkten Axialbewegungen relativ zum Fluiddurchlass einstellbar ist.

7. Filtervorrichtung nach Anspruch 6, **dadurch gekennzeichnet, dass** sich die zumindest eine den Fluiddurchlass bildende (31) über den gesamten Änderuhgsbereich des Fluidpegels erstreckt.

8. Filtervorrichtung nach Anspruch 6 oder 7, **dadurch gekennzeichnet, dass** mehrere, umfänglich in der Gehäusewand(1) verteilte Wandöffnungen (31) als Fluiddurchlässe vorhanden sind.

9. Filtervorrichtung nach einem der Ansprüche 6 bis 8, **dadurch gekennzeichnet, dass** in der Hülsenwand mehrere, umfänglich verteilt angeordnete Durchbrüche (43) vorhanden sind.

10. Filtervorrichtung nach einem der Ansprüche 6 bis 9, **dadurch gekennzeichnet, dass** an der Gehäusewand (1) eine Endlagen der Axialbewegung der Hülse (39) begrenzende Anschlageinrichtung (45) vorhanden ist.

## Claims

1. A filtering apparatus intended for installation in a fluid storage tank, having at least one preferably replaceable filter element (11) through which a fluid can flow from the outside to an inner filter cavity (19) which forms the clean side and which is surrounded by a housing wall (1) which forms a fluid chamber (15) into which the cleaned fluid from the inner filter cavity (19) can flow, the housing wall having at least one wall opening (31) which forms a fluid passage located within the region of the variable fluid level in the storage tank, **characterised in that** there is a control device (39, 41, 43) which can be actuated as a function of the fluid level in the storage tank and which brings the fluid passage through the at least one wall opening (31) nearer the location of the fluid surface in the storage tank.

2. The filtering apparatus according to Claim 1, **characterised in that** the control device (39, 41, 43) has a float (41) which converts fluctuations of the fluid level into positioning movements for adjusting the location of the opening cross section of the fluid passage through the at least one wall opening (31).

3. The filtering apparatus according to Claim 2, **characterised in that** the housing wall having the at least one wall opening (31) is part of a cup-like filter housing (1) which has a closed cup bottom (3) which is exposed to the fluid flow emerging from the inner filter cavity (19) of the filter element (11), and that the cup bottom has a flow deflection device (33, 35) which acts as a diffuser.

4. The filtering apparatus according to Claim 3, **characterised in that** the filter housing (1) is made circularly cylindrical at least in the region of the cup bottom (3), that the cleaned fluid emerges from the inner filter cavity (19) essentially coaxially to the axis of the filter housing (1) in the direction of the cup bottom (3), and that the cup bottom has a curvature (33, 35) which forms the deflection device.

5. The filtering apparatus according to Claim 4, **characterised in that** the curvature is formed by part of the inside wall of a torus (33) so that the axial flow striking the bottom (3) is spread into a radial flow which continues along the housing wall (1) in a rising axial flow.

6. The filtering apparatus according to any of Claims 2 to 5, **characterised in that** the control device (39, 41, 43) has a sleeve (39) which is provided with a buoyancy body (41) which is used as a float which forms a type of valve spool, and which is supported to be able to move axially on the housing wall (1) which has the at least one wall opening (31) and in the sleeve wall has at least one opening (43) which can be adjusted relative to the fluid passage to control the opening cross section of the fluid passage through the at least one wall opening (31) by the axial movements which are caused by the float.

7. The filtering apparatus according to Claim 6, **characterised in that** the at least one wall opening (31) which forms the fluid passage extends over the entire region of change of the fluid level.

8. The filtering apparatus according to Claim 6 or 7, **characterised in that** there are several wall openings (31) distributed peripherally in the housing wall (1) as fluid passages.

9. The filtering apparatus according to any of Claims 6 to 8, **characterised in that** there are several openings (43) distributed peripherally in the sleeve wall.

10. The filtering apparatus according to any of Claims 6 to 9, **characterised in that** on the housing wall (1) there is a stop device (45) which limits the end positions of the axial movement of the sleeve (39).

## Revendications

1. Dispositif de filtration prévu pour être monté dans une cuve réservoir de fluide et comprenant au moins un élément (11) filtrant, de préférence remplaçable, qui peut être traversé par un fluide de l'extérieur à un espace (19) intérieur vide de filtre formant le côté purifié et qui est entouré d'une paroi (1) de corps, qui forme un espace (16) pour du fluide, dans lequel le fluide purifié provenant de l'espace (19) intérieur vide de filtre peut pénétrer, la paroi du corps ayant au moins une ouverture (31), qui forme un passage pour du fluide se trouvant dans la cuve réservoir dans la zone du niveau variable du fluide, **caractérisé en ce qu'**il est prévu un dispositif (39, 41, 43) de commande, qui peut être actionné en fonction du niveau du fluide dans la cuve réservoir et qui tend à faire que le passage pour du fluide de la au moins une ouverture (31) de paroi soit proche de la position de la surface du fluide dans la cuve réservoir.

2. Dispositif de filtration suivant la revendication 1, **caractérisé en ce que** le dispositif (39, 41, 43) de commande a un flotteur (41), qui transforme des fluctuations du niveau du fluide en des mouvements de réglage, pour le réglage de la position de la section transversale d'ouverture du passage pour du fluide de la au moins une ouverture (31) de paroi.

3. Dispositif de filtration suivant la revendication 2, **caractérisé en ce que** la paroi du corps ayant la au moins une ouverture (31) de paroi fait partie d'un corps (1) de filtre de type en pot, qui a un fond (3) de pot fermé, lequel est soumis au courant de fluide sortant de l'espace (19) intérieur vide de filtre de l'élément (11) filtrant, et **en ce que** le fond (3) du pot a un dispositif (33, 35) de déviation du courant servant de diffuseur.

4. Dispositif de filtration suivant la revendication 3, **caractérisé en ce que** le corps (1) du filtre est conformé d'une manière cylindrique de section circulaire, au moins dans la zone du fond (3) du pot, **en ce que** le fluide purifié sortant de l'espace (19) intérieur vide de filtre pour aller vers l'axe du corps (1) du filtre sort sensiblement coaxialement en direction du fond (3) du pot et **en ce que** celui-ci a une courbure (33, 35) formant le dispositif de déviation.

5. Dispositif de filtration suivant la revendication 4, **caractérisé en ce que** la courbure est formée par une partie de la paroi intérieure d'un tore (33), de sorte que le courant axial auquel le fond (3) est soumis s'élargit en un courant axial, qui se prolonge le long de la paroi (3) du corps en un courant axial ascendant.

6. Dispositif de filtration suivant l'une des revendications 2 à 5, **caractérisé en ce que** le dispositif (39, 41, 43) de commande a un manchon (39), qui forme une sorte de tiroir de vanne, qui est muni d'une pièce (41) d'ascension servant de flotteur, qui est monté coulissant axialement sur la paroi (3) du corps ayant la au moins une ouverture (31) de paroi et qui a, dans la paroi du manchon, au moins un passage (43), qui, pour la commande de la section transversale d'ouverture du passage pour du fluide de la au moins une ouverture (31) de paroi, est réglable par les mouvements axiaux relativement au passage pour du fluide provoqués par le flotteur.

7. Dispositif de filtration suivant la revendication 6, **caractérisé en ce que** l'ouverture (31) de paroi formant au moins un passage pour du fluide s'étend sur toute la zone de variation du niveau du fluide.

8. Dispositif de filtration suivant la revendication 6 ou 7, **caractérisé en ce qu'**il y a, comme passage pour du fluide, plusieurs ouvertures (31) de paroi réparties sur le pourtour de la paroi (1) du corps.

9. Dispositif de filtration suivant l'une des revendications 6 à 8, **caractérisé en ce qu'**il y a, dans la paroi du manchon, plusieurs traversées (43) réparties sur le pourtour.

10. Dispositif de filtration suivant l'une des revendications 6 à 9, **caractérisé en ce qu'**il y a un dispositif (45) de butée sur la paroi (1) du corps délimitant des positions d'extrémité du mouvement axial du manchon (39).
